# EUROPEAN PATENT APPLICATION

(11) **EP 2 128 883 A1**
(43) Date of publication of application: **02.12.2009**
(21) Application number: 08425391.3
(22) Date of filing: 30.05.2008
(51) Int. Cl.: H01J 9/52

(54) **Recycling plant for cathode-ray tube television receivers**

(71) Applicant: MERLONI PROGETTI S.p.A., 20151 Milano (IT)
(72) Inventor: Foti, Giuseppe, 20090 Buccinasco (Milano) (IT); Marchioni, Marco, 10040 Caprie (Torino) (IT); Merloni, Aristide, 60044 Fabriano (Ancona) (IT)
(74) Representative: Long, Giorgio

(57) **Abstract**

The present invention relates to a recycling plant of cathode ray tubes (CRT = Cathode Ray Tube) of television receivers, through the separation of the cone glass from the screen glass and the differentiated recovery thereof.

In particular, the present invention relates to a plant (1) for the recycling of CRT glass material, comprising a cone breaking equipment (4) for the separation of the cone glass in a crushed form from the uncrushed screen glass, and grinding means (12) downstream said cone breaking equipment (4),
**characterized in that** it further comprises iron removing means (14) and blowing separation means (15) for the glass material exiting from said grinding means (12), and washing means (19) for the glass material arranged downstream said blowing separation means (15).

## Description

The present invention relates to a recycling plant for cathode ray tubes (CRT = Cathode Ray Tube) of television receivers, through the separation of the cone glass from the screen glass and the differentiated recovery thereof.

Waste material recycling industry has gained an ever-increasing importance due to substantially environmental reasons. In fact, it is suitable to decrease the amount of material sent to landfills, which landfills have to be confined in limited areas, or to incinerators, which are often the butt of criticism due to the pollution potential thereof deriving from the fumes exiting the plant, which fumes, if not abated, contain substances harmful to health.

In addition to environmental reasons, there are also sound economic reasons which drive to recover the highest possible percentage of waste materials. In fact, waste disposal is a large social cost. Such cost can be at least partially recovered if the materials to be disposed of can find an economically advantageous use. In this regard, waste incineration leads to an energy recovery in terms of heat (the so-called "thermal valorisation") which can be used for domestic heating or to generate electric energy also for industrial purposes.

Instead, as regards the recovery of materials, the latter can be brought back to the cycle along with the virgin material or, if they are of a lower quality, can be used for applications in which a high quality standard is not required (carrier or filler materials, or intended to the fabrication of products by reuse techniques).

Recycling of household appliances or complex products in general, such as television receivers, computer screens, and the like, deserves a separate mention.

The latter pose a severe disposal problem, moreover considering that, with the spreading of the flat screen (LCD or plasma screen) technology, a constantly increasing abandon of the conventional cathode ray tube screens can be expected during the next years. In fact, such products contain a high amount (up to 85% by weight) of glass material, along with metal components, plastic materials, and sometimes wood. In such situation, it is advisable to separate the various materials so as to send them to the reuse thereof, and to minimize the waste amount to be sent to landfills, or, where possible, to thermal valorisation. In particular, CRTs are composed of at least two different types of glass, that is the glass of which the screen is made (about 65% by weight), and the glass of the cone (about 30% by weight). The latter contains a high percentage in lead (18-20% PbO) and, although in a lower amount, arsenic, which make it unusable in products such as glass containers, table glassware, or glass fibres, for which only the screen glass can be reused. Recently, however, applications in glass-ceramic materials have been proposed, such as ceramic enamels for tiles, for which the recycled glass from the CRTs cone could be used.

Therefore, the technical efforts devoted in the field are intended to devise recycling processes which allow separating the individual materials and, in particular, the two different types of glass with a high yield.

Therefore, the problem underlying the present invention is to provide a recycling plant for the materials composing the CRTs with a high purity and yield.

Such problem is solved by a plant as defined in the annexed claims, the definitions of which are an integral part of the present description.

Further characteristics and the advantages of the present invention will be more clearly understood with the description of an exemplary embodiment, given herein below by way of non-limiting example, with reference to the following Figures:

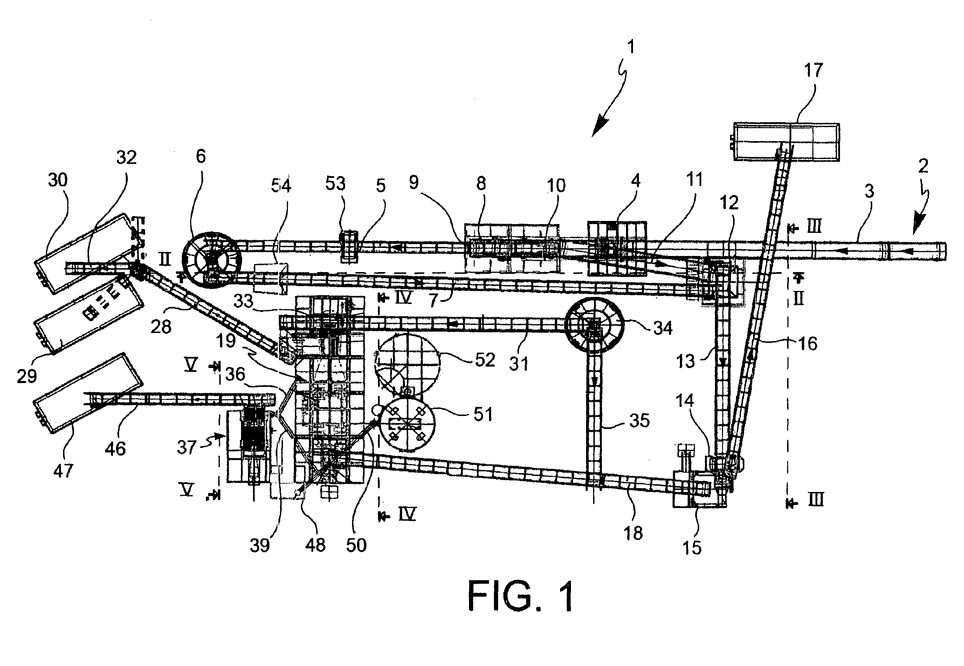

Fig. 1 illustrates a plan schematic view of the plant of the invention;

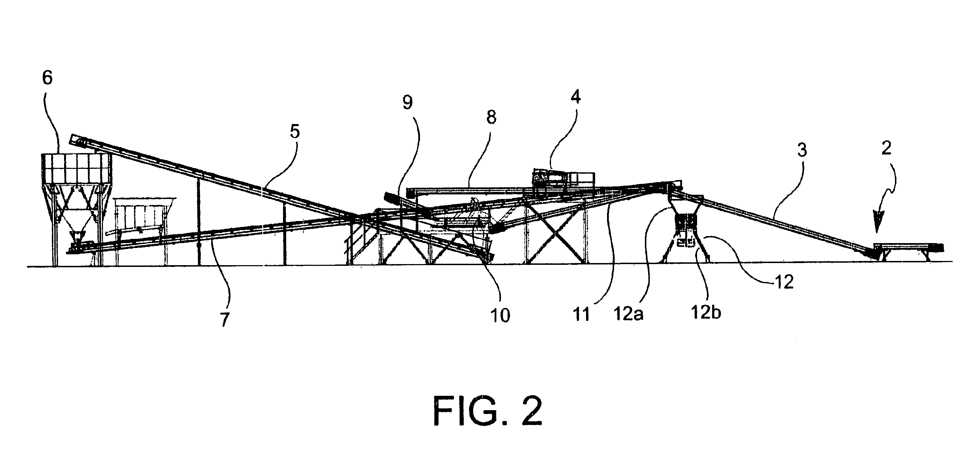

Fig. 2 illustrates a side sectional view, according to the direction II-II of Fig. 1;

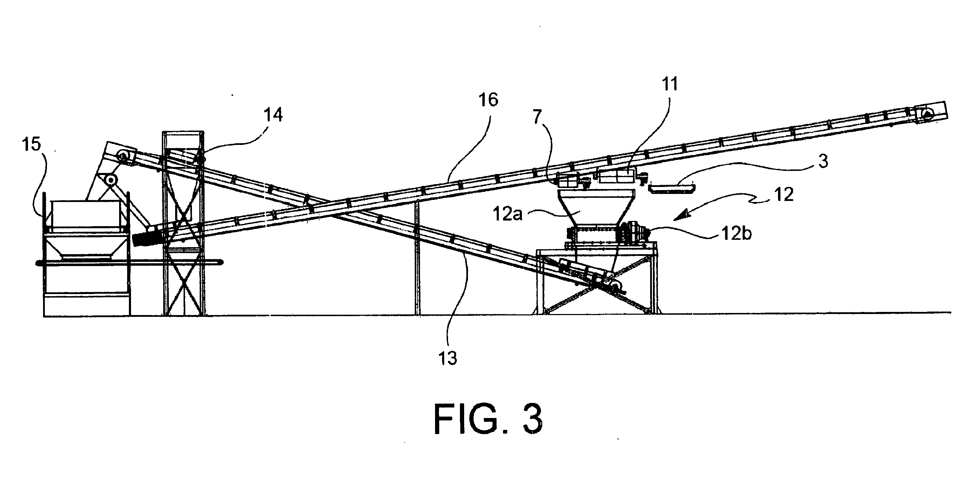

Fig. 3 illustrates a side sectional view, according to the direction III-III of Fig. 1;

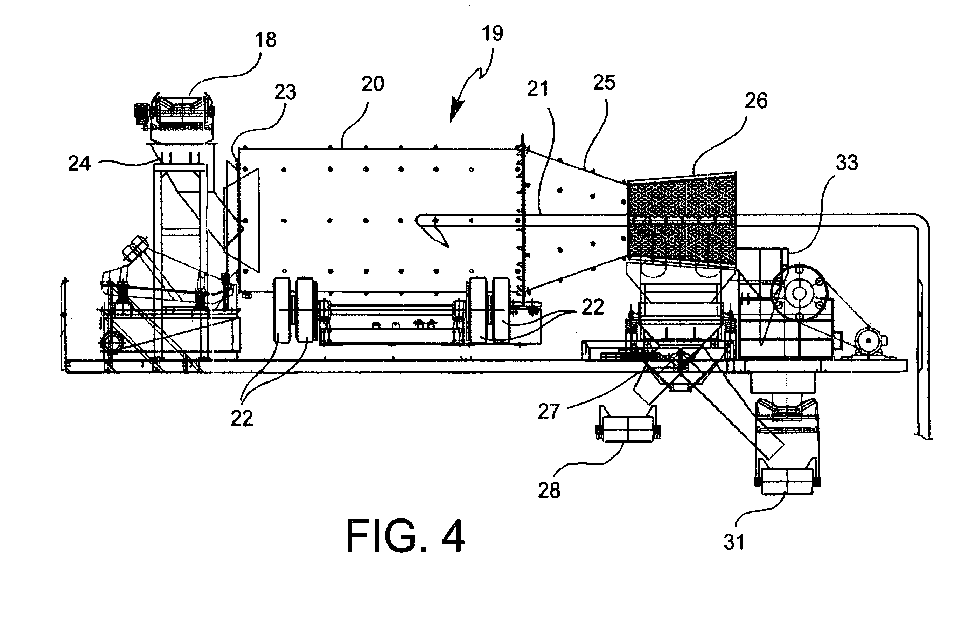

Fig. 4 illustrates a side sectional view, according to the direction IV-IV of Fig. 1;
Fig. 5 illustrates a side sectional view, according to the direction V-V of Fig. 1,
Fig. 6 illustrates a cross-sectional perspective view of the cone breaking equipment according to the invention;
Fig. 6A illustrates a detail of the equipment in Fig. 6;
Fig. 7 illustrates a plan schematic view of a second embodiment of the inventive plant.

With reference to the Figures, the CRT recycling plant, generally indicated with the reference numeral 1, comprises a loading area 2 for the CRTs, from which conveyor means 3 depart, which send said CRT to a cone breaking equipment 4, in which the CRT cone is separated from the screen, further releasing the sheets and wire meshes contained therein.

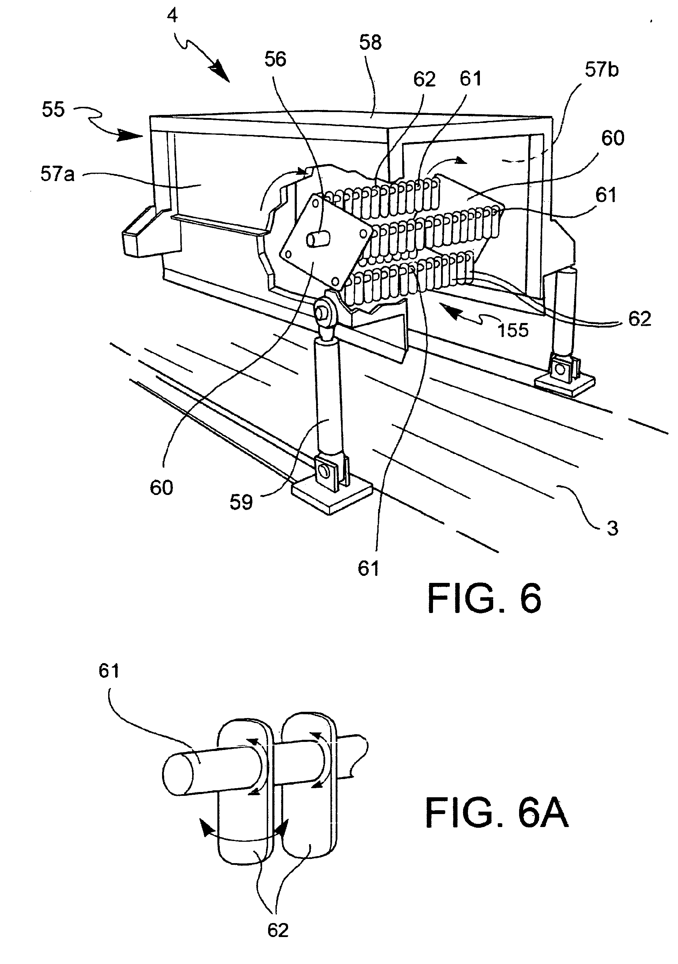

The cone breaking equipment 4, shown in Figs. 6 and 6A, comprises a crushing chamber 55 in which crushing means 155 are rotatably supported. The crushing chamber 55 is a structure having two side walls 57a, 57b, and an upper surface 58. The crushing chamber 55 is height-adjustably supported above the conveyor means 3 (on which the CRTs arrive), for example by means of special hydraulic or pneumatic pistons, or other actuating means 59.

The crushing means 155 comprise a horizontal shaft 56 moved by a suitable motor drive (not shown); the shaft 56 is transversally arranged relative to the conveying direction of the conveyor means 3. Opposite plates 60 are integral to the shaft 56, which plates are of a squared shape in the example, but can have different shapes. In the proximity of the angles or, anyhow, at equally spaced positions along the perimeter thereof, said plates 60 are joined by one or more rods 61, four in the example, supporting a plurality of idly mounted hammers 62. In practice, the hammers 62 are composed of an elongated member, with a through hole drilled in the proximity of an end thereof, so as to be able to be inserted on the rod 61.

A sensor, arranged along the conveyor means 3, upstream the cone breaking equipment 4, reads the incoming CRT size (small, medium, or large) and sends the information to a check and control unit which sends a command to the actuating means 59, so as to suitably adjust the cone breaking equipment 4 height. In fact, it is crucial that the hammers 62 hit the CRT in the proximity of the joint point (the so-called "frit junction") between screen and cone, so as to efficiently separate the two types of glass.

During the equipment operation, the shaft 56 is rotated by the motor drive thereof, and also the plates 60 rotate with it, to which plates also the rods 61 are integral. The hammers 62, since they are idly mounted, always keep the free end thereof downwardly turned, even if they undergo an oscillating movement. The synergic movements cause a series of percussions on the CRT cone, which, as a result, breaks into small pieces.

When exiting the cone breaking equipment 4, the CRT screen, still intact, and the crushed cone glass drive on conveyor means 8, which end above further conveyor means 9, having an opposite conveying direction than the means 8, and being arranged on a descending slope. The assembly of conveyor means 8 and 9 forms CRT screen turnover means, since the screen, leaning out of the conveyor means 8 end portion, tends to rotate, thus arranging in an upright position, while the means 9, which move in an opposite direction compared to the screen incoming direction, finalize the turnover of the same. Such turnover action is important, since the screen, having a concave shape, collects most of the cone fragments therein. Due to the turnover, all the cone glass is spread out on the conveyor means 9 independently from the uncrushed screen.

From the conveyor means 9, the screen glass comes to screening means 10, preferably consisting in a parallel bar vibrating screen of a conventional type, through which the crushed cone glass passes and falls on the transport means 5, while the uncrushed screen is hold. The screening means 10 are preferably slightly sloped with a descending slope relative to the glass incoming direction on the vibrating screen, so that the combined effect of vibration and slope pushes the screen on conveyor means 11.

The cone glass is brought, through said conveyor means 5, to a storage container 6, from which such material will be subsequently sent, through the conveyor means 7, to be further processed, as described in detail herein below.

On the conveyor means 7 a loading hopper 54 for fragmented glass is advantageously arranged (CRTs which arrived yet crushed, etc.), which can be loaded to the plant, so as to make it undergo the whole process.

Iron removing means 53 are preferably arranged along the conveyor means 5, which remove by magnetic attraction small amounts of iron materials passing through the screening means 10.

The conveyor means 11 convey the uncrushed screen, along with metal pieces associated thereto, or anyhow having such dimensions as to be prevented from passing through the screening means 10, to grinding means 12.

The grinding means 12 preferably comprise a loading hopper 12a, arranged beneath the release end of the conveyor means 11, and a mill 12b arranged beneath said hopper 12a. The mill 12b is, for example, a rotating knife mill, even if other types of grinders could be used. Then the grinding means 12 crush to small pieces both the CRT screen glass and the metal parts associated thereto.

The material crushed in the grinding means 12 falls on conveyor means 13, which convey it to the iron removing means 14, and to blowing separation means 15 directly after.

Such iron removing means 14 cause the removal of iron by magnetic attraction (electromagnet), making it fall on adjacent conveyor means 16 which send it to a recovery container 17. Such operation and the equipment for the implementation thereof are completely conventional; therefore, they will not be described in more detail herein below.

The blowing separation means 15 comprise blowers which put a high-speed air flow in an essentially transversal direction relative to the material falling from the conveyor means 13. In this manner, the fragments consisting in light materials of various kind, such as plastic or wood, are pushed transversally and separated from the heavier glass material, which, on the contrary, falls on the underlying conveyor means 18. A suction system, arranged above the equipment, provides for the removal of the powders. A similar suction system is also arranged at the previous dry treatments of the material to be recycled, that is, on the grinding means 12, the turnover means 8, 9, and the cone breaking equipment 4.

The conveyor means 18 convey the crumbled glass to washing means 19. The washing means 19 comprise a rotating drum 20 wherein washing water is inputted by means of a suitable tubing 21. The rotating drum 20 is rotated around the longitudinal axis thereof, for example, through rubber wheels 22 arranged beneath and on which the drum 20 is made to roll. The rubber wheels 22 are, in turn, rotated by a suitable motor drive.

The rotating drum 20 comprises a loading end 23, in which the glass to be washed, coming from the conveyor means 18 is charged, and a tapered-shaped unloading end 25 opening into filtering means 26 which are integral to the rotating drum 20 and specifically consisting in a cylindrical grid.

The glass fragments having a sufficiently small size as to be able to pass trough the filtering means 26 (particle size, 2-32 mm) can be sent on conveyor means 28 which convey them to suitable recovery containers 29, 30, or can be placed on recycling conveyor means 31, according to the needs. In fact, if one wanted to extend the washing period (as in the case of cone glass processing, on which more impurities are adherent that on the screen glass), it would be necessary to convey the glass exiting from the rotating drum 20 on such recycling conveyor means 31.

The shunting of glass between conveyor means 28 and 31 occurs by means of suitable shunting means 27, such as, for example, a gate shunter.

A manifold for the washing water which is recovered and recycled as will be described herein below is also arranged beneath the filtering means 26.

The conveyor means 28 end with a traversing conveyor 32 which can be moved above the container 29 or the container 30, alternatively, so as to differentiate the type of glass recovered according to the performed processing.

The glass of a larger size, which does not pass through the filtering means 26, comes to the grinding means 33, typically consisting in a jaw crusher of a known type. The ground glass is also unloaded on the recycling conveyor means 31, which provide for the transportation of the glass to a storage container 34, from which further recycling conveyor means 35 bring the glass -which will have to undergo a further washing-back onto the conveyor means 18 and, therefrom, to the washing means 19.

The washing waters unloaded from the washing means 19, containing dirty water (sludges) with suspended silica sand (having a particle size of 0-2 mm), are sent, via a special tubing 36, to separating means 37 of the sludge water from sand. Such separating means 37 comprise a tank 38 into which the tubing 36 as well as a second tubing 39 merge, which second tubing recovers, by means of a suitable manifold, water draining from the recycled material through the conveyor means 18. Pumping means 40, sucking in the proximity of the tank 38 bottom, transport the aqueous suspension comprising sand, via tubing 42, into centrifugal separation means 41, typically a cyclone of a known type, from which the water separated from sand are recycled, via tubing 43, to the tank 38 by centrifugal force. On the other hand, the glass sand is recovered at the centrifugal separation means 41 bottom 44, from which they are continuously unloaded onto vibrating means 45 and, therefrom, onto conveyor means 46. The conveyor means 46 convey the glass sand to a recovery container 47.

From the tank 38, the sludge water is transferred by a spillway to a collection tank 48, wherein stirring means 49 provide to keep the sludges in suspension. The water to be treated is transferred through suitable pumping means, and via a tubing 50, from such collection tank 48 to a decantation tank 51. Flocculating agent metering means are arranged along the tubing 50, in order to promote the flocculation, thus the decantation of the sludges in the tank 51.

From the decantation tank 51 bottom, the flocculated sludges are discharged into special filtering bags, where the residual water is drained, while the dry sludges are sent to the disposal.

From the upper portion of the decantation tank 51, the cleaned water is sent to a recycle tank 52, from where it can be loaded again into the washing means 19 via said tubing 21.

What has hereto described is the processing of screen glass from uncrushed CRTs, while the cone glass is stored in the storage container 6, as previously stated. When such container 6 is full, the load of uncrushed CRTs from the loading area 2 is stopped and, on the other hand, the cone glass processing is started, by conveying such glass from the storage container 6 to the grinding means 12 through the conveyor means 7. At this point, the cone glass processing is the same than the screen glass one, therefore it will not be described again. As previously stated, the cone glass has more contaminants (paints, lead oxides), therefore it needs a more prolonged washing, which is performed by the glass recirculation, via the conveyor means 31, 35, 18, to the washing means 19 until washing is completed.

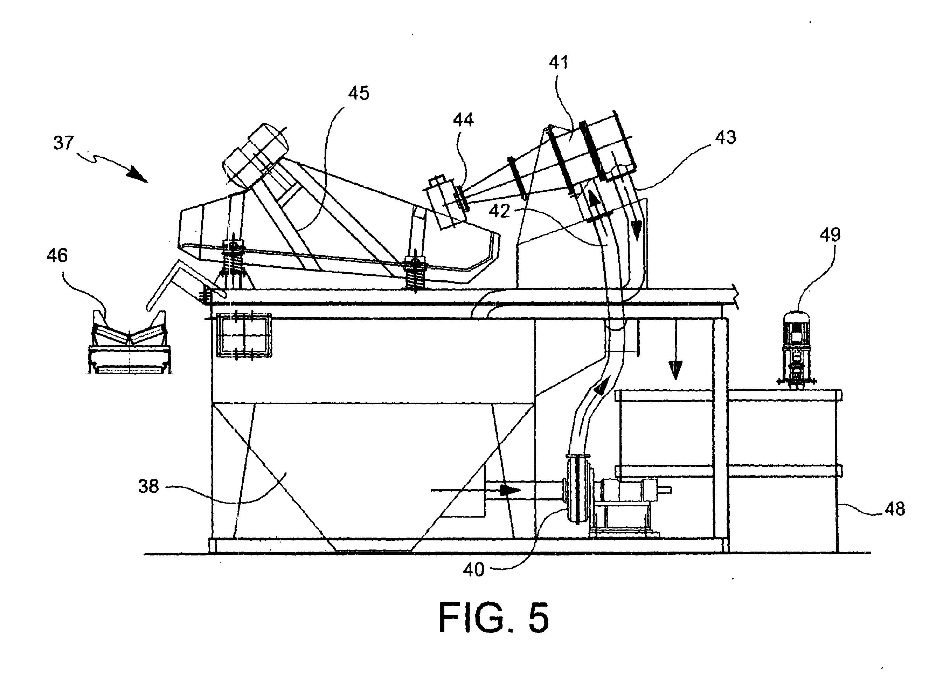

The conveyor means 5, 7, 13, 18, 31, 35 intended to the handling of fragmented glass material advantageously have an U-shaped outline, so as to create a sort of glass containment channel. For example, such conveyor means may comprise a conveyor belt in flexible material (rubber) sliding on two series of rolls which are V-arranged, as shown for example in Fig. 5 with the reference number 46.

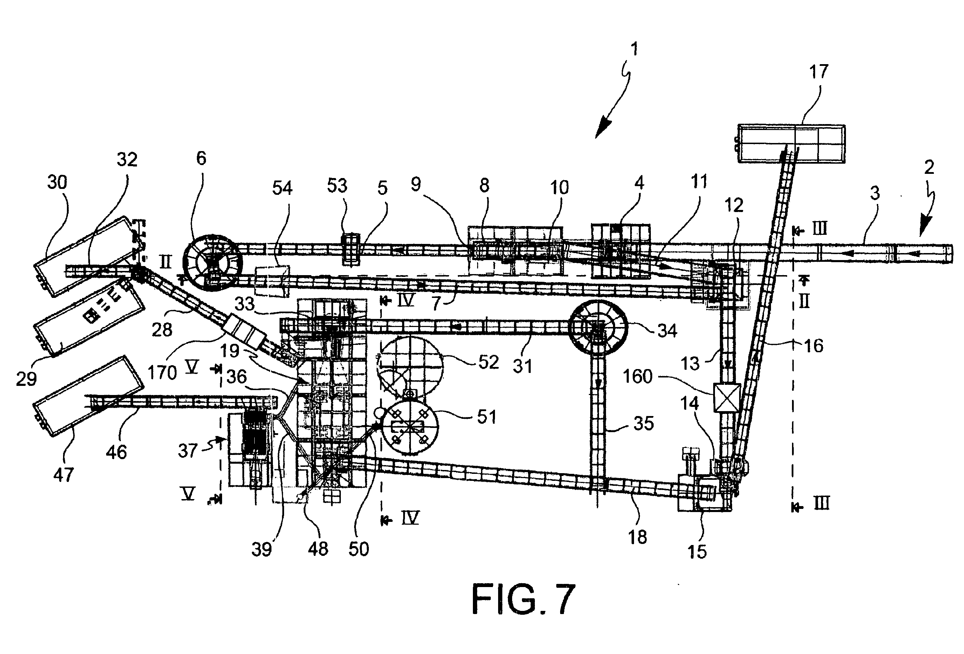

In a further embodiment of the inventive plant, shown in Fig. 7, suction means 160 (they are shown by way of example on the conveyor means 13 in Fig. 7) can be arranged along the conveyor means 13, 18, 31, or 35, which are adapted to remove by suction both metallic (typically, non-ferrous materials) and non-metallic light materials. Such suction means 160 will be able to comprise one or more suction ducts height-adjustable above the conveyor means, essentially as shown and described in the published Patent Application EP 1 747 870 A1 in the name of the same Applicant (Fig. 5 and related description).

In a further embodiment, again shown in Fig. 7, the conveyor means 28 are intercepted by selecting means 170 for the different types of glass (cone glass or screen glass). In fact, it is possible that even small amounts of a glass pollute the other type; in particular, that the screen glass comprises small amounts of cone glass. Therefore, said selecting means 170 will provide to remove the small amounts of cone glass which have passed through the various stages of the screen processing, thus resulting in a screen glass with a purity near to 100%.

Advantageously, said selecting means 170 are composed of a sorting apparatus with sorting of high-resolution X-ray transmission images. Such equipment is known and commercially available, being commercialized by CommoDaS GmbH under the name Microsort^{®} X-Tract. Such equipment sorts the incoming material on a perforated grid, as a function of its specific atomic density. A plurality of pneumatic valves is arranged beneath the grid, which valves are connected to a blower, and actuated by a check and control unit which processes the X-ray transmission images relative to the individual piece of incoming material, compares them to a standard as a function of the atomic density thereof, and activates the pneumatic valves at the piece of material having an atomic density above or below the predetermined threshold value, according to the situations. The compressed air throws the material to be discarded off the grid, while the remaining material proceeds on the conveyor means 28, as described above.

In essence, the plant according to the invention allows carrying out a method for the recycling of glass material coming from CRTs, which comprises a first separation step of cone glass from screen glass, a second grinding step of such separated glasses, a third iron and light material removal step from such ground glasses, a fourth washing step of such glasses for the removal of silica sand and sludges deriving from paints, phosphorescent layers, and metal oxides, and a fifth differentiated recovery step of said glasses.

The washing step, in particular, can be extended as desired, through a recycle step of the glass exiting from the washing means. Such recycle step may also advantageously comprise a homogenization step for the size of the treated glass, through the special mill 33.

Such method allows obtaining a high purity glass, essentially free from debris of several materials, such as iron, wood, or plastics, therefore having a quality markedly higher than the one which can be obtained by conventional methods.

The co-occurrence of the two storage containers 6, 34 arranged in-line further allows alternating the cone glass processing and the screen glass processing, with the highest efficiency and in a semi-continuous mode.

It shall be appreciated that only a particular embodiment of the present invention has been described, to which those skilled in the art will be able to make all the modifications which are required for the adaptation thereof to particular applications, without anyhow departing from the protection scope of the following claims.

## Claims

1. A plant (1) for recycling CRT glass material, comprising a cone breaking equipment (4) for the separation of the cone glass in a crushed form from the uncrushed screen glass, and grinding means (12) downstream said cone breaking equipment (4), **characterized in that** it further comprises iron removing means (14) and blowing separation means (15) for the glass material exiting from said grinding means (12), and washing means (19) for the glass material arranged downstream said blowing separation means (15).

2. The plant (1) according to claim 1, wherein screening means (10) are arranged directly downstream said cone breaking equipment (4) for the separation of the crushed cone glass from the uncrushed screen.

3. The plant (1) according to claim 2, wherein turnover means (8, 9) of the CRT screen are arranged between said cone breaking equipment (4) and said screening means (10).

4. The plant (1) according to any one of the claims 1 to 3, said plant further comprising, downstream said washing means (19), recycling conveyor means (31, 35) to recycle the glass material which is being processed to said washing means (19).

5. The plant (1) according to any one of the claims 1 to 4, filtering means (26) being arranged at the exit of said washing means (19) to separate silica sand from the glass fragments.

6. The plant (1) according to claim 5, wherein grinding means (33) are arranged between said filtering means (26) and said recycling conveyor means (31, 35) to reduce the size of said glass fragments.

7. The plant (1) according to any one of the claims 1 to 6, wherein said cone breaking equipment (4) comprises a crushing chamber (55) in which height-adjustable crushing means (155) for said CRT are rotatably supported, for the crushing of the cone glass in a manner that can be adapted to different dimensions of the CRT.

8. The plant (1) according to claim 7, wherein said crushing means (155) comprise a motorized horizontal shaft (56), arranged transversally relative to the incoming direction of said CRT, and a plurality of idly mounted hammers (62); said crushing chamber (55) being height-adjustably supported above conveyor means (3) on which the CRTs arrive through actuating means (59).

9. The plant (1) according to claim 7 or 8, said plant comprising a sensor located upstream the cone breaking equipment (4), which reads the size of the incoming CRT, and sends the information to a check and control unit, which sends a command to said actuating means (59) so as to suitably adjust the cone breaking equipment (4) height.

10. The plant (1) according to any one of the claims 1 to 9, wherein said iron removing means (14) comprise an electromagnet removing the iron materials by magnetic attraction and sends them to a conveyor means (16), and said blowing separation means (15) comprise blowers which put a high-speed air flow in an essentially transversal direction relative to the material falling from conveyor means (13) arriving to underlying conveyor means (18) for the withdrawal.

11. The plant (1) according to any one of the claims 1 to 10, wherein said washing means (19) comprise a drum (20) rotating around the longitudinal axis thereof, in which washing water is inputted, and comprises a loading end (23), wherein the glass to be washed coming from conveyor means (18) is put, and a tapered unloading end (25).

12. The plant (1) according to claim 11, wherein said unloading end (25) of said rotating drum (20) opens into filtering means (26) integral to the rotating drum (20) consisting in a cylindrical grid.

13. The plant (1) according to any one of the claims 3 to 12, wherein said turnover means (8, 9) of the CRT screen comprise first conveyor means (8) which end above second conveyor means (9) with a conveying direction opposite to the conveyor means (8) and arranged in a descending slope, so that the screen, when passing from said first (8) to said second conveyor means (9), overturns.

14. The plant (1) according to any one of the claims 2 to 13, wherein conveyor means (5) are arranged beneath said screening means (10), which send the crushed glass of the CRT cone to a storage container (6).

15. The plant (1) according to any one of the claims 1 to 14, comprising a washing water treatment system which comprises separating means (37) of the sludge water from sand.

16. The plant (1) according to claim 15, wherein said separating means (37) comprise a collecting tank (38) for the washing water, pumping means (40) which suck in the proximity of the tank (38) bottom and send the sand aqueous suspension into centrifugal separation means (41).

17. The plant (1) according to claim 16, wherein a decantation tank (51) is arranged downstream said centrifugal separation means (41), for the removal of the sludges deposited thereon.

18. The plant (1) according to any one of the claims 1 to 17, further comprising, along one or more of said conveyor means (13, 18, 31, 35), suction means (160) adapted to remove by suction light materials such as non-ferrous metals or non-metal materials.

19. The plant (1) according to any one of the claims 1 to 18, wherein the selected glass material is sent, through conveyor means (28) to recovery containers (29, 30), said conveyor means (28) being intercepted from selecting means (170) to separate the different types of glass.

20. The plant (1) according to claim 19, said selecting means (170) being composed of sorting equipment with sorting of high-resolution X-ray transmission images.

21. Method for the recycling of glass material deriving from CRTs which comprises a first separation step of the cone glass from the screen glass, a second grinding step of such separated glasses, a third iron and light material removal step from such ground glasses, a fourth washing step of such glasses for the removal of silica sand and sludges, and a fifth differentiated recovery step of said glasses.

22. The method according to claim 21, wherein said washing step is extended as desired, through a recycle step of the glass.

23. Method according to claim 22, wherein said recycle step comprises a homogenization step for the size of the treated glass.
